# EUROPEAN PATENT SPECIFICATION

(11) **EP 3 042 880 B1**
(45) Date of publication and mention of the grant of the patent: **15.01.2020**
(21) Application number: 14841301.6
(22) Date of filing: 01.09.2014
(51) Int. Cl.: C03B 18/20, C03C 15/00, C03C 3/087, C03B 18/14

(54) **METHOD FOR PRODUCING GLASS PLATE**
VERFAHREN ZUR HERSTELLUNG EINER GLASPLATTE
PROCÉDÉ DE PRODUCTION DE PLAQUE DE VERRE

(30) Priority: 02.09.2013 JP 2013181390; 19.12.2013 JP 2013262284
(43) Date of publication of application: 13.07.2016
(73) Proprietor: Nippon Sheet Glass Company, Limited, Tokyo 108-6321 (JP)
(72) Inventor: TANAKA, Satoshi, Tokyo 108-6321 (JP); TSURI, Keiko, Tokyo 108-6321 (JP); KOYO, Hirotaka, Tokyo 108-6321 (JP); MITANI, Kazuishi, Tokyo 108-6321 (JP); SAITO, Yasuhiro, Tokyo 108-6321 (JP)
(74) Representative: Cabinet Beau de Loménie
(86) International application number: PCT/JP2014/004478
(87) International publication number: WO 2015/029455

(56) References cited:
- EP-A2- 1 054 454
- WO-A1-2012/141310
- WO-A1-2012/141311
- WO-A1-2014/104303
- JP-A- 2002 201 043
- JP-A- 2005 067 974
- JP-A- 2013 087 043

## Description

### TECHNICAL FIELD

The present invention relates to a method for producing a glass sheet.

### BACKGROUND ART

For example, glass sheets used as front glass panels for thin-film solar cells are required to have high haze ratios for incident light to scatter the incident light and increase the light utilization efficiency. In some cases, glass sheets for windows of buildings or moving vehicles and for partitions are also required to have high haze ratios for incident light to take on light scattering properties. The following methods have been proposed to increase the haze ratios of glass sheets.

Patent Literature 1 proposes a method for forming a structure of periodically repeating ridges and grooves (an irregular surface structure) on the surface of a glass sheet by sandblast. Patent Literature 2 proposes a method for forming a film having a high haze ratio on the surface of a glass sheet. Patent Literature 3 proposes a method for forming irregularities in the surface of a glass sheet by etching the surface of the glass sheet using an etchant.

Patent Literature 4 discloses a method for manufacturing a glass provided with a thin film for suppressing the amount of an alkali ion reaching a metal-containing thin film by diffusing from the glass and preventing the deterioration of the metal-containing thin film when the metal-containing thin film such as a metal film or a metal oxide film is formed on the surface of a soda-lime glass, wherein the surface of a heated soda-lime glass or a glass ribbon on a molten metal bath is treated by supplying a gas containing a halogen element on the surface, then the thin film is formed by supplying a thin film forming material on the treated surface.

Patent Literature 5 discloses a glass sheet with conductive film, wherein on a glass sheet, undercoating layers and a conductive film containing tin oxide as a main component are formed suitably in this order. On the conductive film, a photoelectric conversion unit and a back electrode are formed, thus obtaining a thin film photoelectric conversion device.

### CITATION LIST

### Patent Literature

Patent Literature 1: JP 2011-096367 A
Patent Literature 2: JP 2001-278637 A
Patent Literature 3: JP 2013-040091 A
Patent Literature 4: JP 2005-067974 A
Patent Literature 5: EP 1 054 454 A2

### SUMMARY OF INVENTION

### Technical Problem

In the conventional methods as proposed in Patent Literatures 1 to 3, in order to produce a glass sheet having light scattering properties, a complex operation for increasing the haze ratio of a raw glass sheet must be performed in addition to the production of the raw glass sheet by a known method. Therefore, these conventional methods have the problem of complex production processes, which cause a significant decrease in production efficiency and a significant increase in production cost.

It is therefore an object of the present invention to provide a glass sheet having light scattering properties in a more simple way without a significant decrease in production efficiency but with a minimal increase in production cost.

### Solution to Problem

The subject-matter of the present invention is defined by the claims.

### Advantageous Effects of Invention

According to the glass sheet production method of the present invention, it is possible to produce a glass sheet having light scattering properties only by performing a very simple operation of bringing a specific mixed gas into contact with the surface of a sheet-shaped glass material having a high temperature (i.e., a temperature in a range from the glass transition temperature to a temperature 300°C higher than the glass transition temperature). The operation of bringing the mixed gas into contact with the glass material is performed when the sheet-shaped glass material is at a high temperature. Therefore, it is also possible to perform the operation of bringing a mixed gas into contact with a glass material in the step (I) of the glass sheet production method of the present invention, between the formation of a molten glass material into a sheet and the cooling of the sheet-shaped glass material in a known glass sheet production method. Therefore, unlike conventional methods in which a previously produced raw glass sheet is subjected to surface treatment, the glass sheet production method of the present invention makes it possible to produce a glass sheet by a known method such as a float process while performing the operation of imparting light scattering properties to the glass sheet (step (I)) during the production process thereof. Thus, according to the production method of the present invention, it is possible to provide a glass sheet having light scattering properties in a more simple way than in conventional methods, without a significant decrease in production efficiency but with a minimal increase in production cost.

### BRIEF DESCRIPTION OF DRAWINGS

FIG. 1 is a schematic diagram showing an example of a system capable of carrying out a glass sheet production method of the present invention.
FIG. 2A is a binarized image of a cross section taken along the thickness direction of a glass sheet of Example 1.
FIG. 2B is a binarized image of a cross section taken along the thickness direction of a glass sheet of Example 2.
FIG. 2C is a binarized image of a cross section taken along the thickness direction of a glass sheet of Example 3.
FIG. 3A is a graph showing porosity calculated based on the result shown in FIG. 2A.
FIG. 3B is a graph showing porosity calculated based on the result shown in FIG. 2B.
FIG. 3C is a graph showing porosity calculated based on the result shown in FIG. 2C.
FIG. 4A is a SEM photograph of the glass sheet of Example 1, taken from obliquely above.
FIG. 4B is a SEM photograph of the glass sheet of Example 2, taken from obliquely above.
FIG. 4C is a SEM photograph of the glass sheet of Example 3, taken from obliquely above.
FIG. 5A is a SEM photograph of a glass sheet of Comparative Example 2, taken from obliquely above.
FIG. 5B is a SEM photograph of a glass sheet of Comparative Example 3, taken from obliquely above.
FIG. 5C is a SEM photograph of a glass sheet of Comparative Example 6, taken from obliquely above.

### DESCRIPTION OF EMBODIMENTS

An embodiment of the glass sheet production method of the present invention is described. The glass sheet production method of the present embodiment is a method for producing a glass sheet having light scattering properties as defined by the claims.

As used herein, the term "light" refers to light predominantly in the wavelength range of 380 nm to 780 nm. The glass sheet prepared by the method of the present invention is required to exhibit the properties of scattering light in the visible light region. For this reason, light in the visible light region (in the wavelength range of 380 nm to 780 nm) is selected. In the present description, Illuminant C is used. As used herein, the phrase "an extent that the light scattering properties are changed" refers to a change of at least 5% in the haze ratio.

The step (I) of bringing the mixed gas into contact with the surface of the glass material may be carried out at least two separate times.

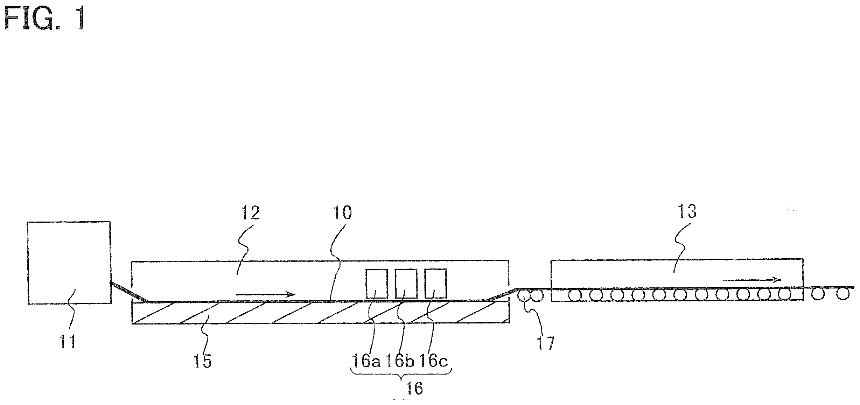

The glass sheet production method of the present embodiment can be applied, for example, to the production of a glass sheet by a float process. That is, in the glass sheet production method of the present embodiment, the step (I) may include:
forming a molten glass material into a sheet on a molten metal; and
bringing the mixed gas into contact with a surface of the sheet-shaped glass material floating on the molten metal and having a temperature in a range from a glass transition temperature to a temperature 300°C higher than the glass transition temperature, so as to change a surface morphology of the glass material to an extent that light scattering properties of the glass material are changed.
This method can be carried out, for example, using a system shown in FIG. 1. As an example of the glass sheet production method of the present embodiment, a method for producing a glass sheet by a float process is described below.

A glass material melted (molten glass) in a float furnace 11 flows from the float furnace 11 into a float bath 12, forms into a semisolid glass ribbon 10 (a sheet-shaped glass material) while traveling on molten tin (molten metal) 15, and is then drawn out of the float bath by a roller 17 to be fed into an annealing furnace 13. The glass ribbon solidified in the annealing furnace 13 is cut into glass sheets having a predetermined size by a cutting device which is not shown.

A predetermined number of spray guns 16 (three spray guns 16a, 16b, and 16c in the system shown) are disposed in the float bath 12 at a predetermined distance from the surface of the high-temperature glass ribbon 10 on the molten tin 15. A mixed gas containing a fluorine element (F)-containing acid A and a chlorine element (Cl)-containing acid Bis continuously supplied onto the glass ribbon 10 from at least one of the spray guns 16a to 16c. By bringing this mixed gas into contact with the surface of the glass ribbon 10, the surface morphology of the glass ribbon 10 can be changed to the extent that the light scattering properties of the glass ribbon are changed. Specifically, irregularities that allow effective light scattering can be formed in the surface of the glass ribbon 10. The temperature of the glass ribbon 10 on the molten tin 15 is a high temperature equal to or higher than the glass transition temperature. When the glass ribbon 10 comes into contact with the mixed gas, the temperature of the glass ribbon 10 is in a range from the glass transition temperature to a temperature 300°C higher than the glass transition temperature. Since the glass ribbon 10 is at such a high temperature, modification of the glass surface is effectively achieved.

As the acid *A* contained in the mixed gas, hydrogen fluoride (HF) is suitably used. When HF is used as the acid *A,* the concentration of HF contained in the mixed gas is 1 to 10 mol%, and preferably 3 to 5 mol%. An acid that is converted into HF in the course of a reaction, that is, an acid from which HF is produced as a result of the reaction, also can be used as the acid *A.* Examples of the acid *A* include trifluoroacetic acid, fluorocarbons such as carbon tetrafluoride (CF₄), silicon tetrafluoride, phosphorus pentafluoride, phosphorus trifluoride, boron trifluoride, nitrogen trifluoride, and chlorine trifluoride.

As the acid *B* contained in the mixed gas, hydrogen chloride (HCl) is suitably used. When HCl is used as the acid *B*, the concentration of HCl contained in the mixed gas is 0.1 to 10 mol%, and preferably 1 to 4 mol%. Hypochlorous acid, for example, also can be used as the acid *B*.

The present inventors believe that the following are the reasons why the contact of the mixed gas with the surface of the high-temperature glass ribbon 10 can change the surface morphology of the glass ribbon 10 so as to form irregularities that allow effective scattering of visible light in the surface thereof. Here, for example, the case where a mixed gas containing HF as the acid *A* and HCl as the acid *B* is used is described.

When HF comes into contact with the surface of the glass ribbon 10, HF breaks Si-O bonds that are basic structures of the glass (Reaction Formula (1) below) or causes a dealkalization reaction to occur (Reaction Formulae (2) and (3) below).

≡Si-O-Si≡ + HF ↔ ≡Si-OH + F-Si≡ (1)

HF + H₂O ↔ H₃O⁺ + F- (2)

≡Si-O⁻Na⁺ + H₃O⁺ + F⁻ ↔ ≡Si-OH + H₂O + NaF (3)

Furthermore, when HCl comes into contact with the surface of the glass ribbon 10, HCl reacts with sodium contained in the glass, so that NaCl crystals are formed locally (Reaction Formula (4) below).

≡Si-O⁻Na⁺ + HO-Si≡ + HCl → ≡Si-O-Si≡ + NaCl + H₂O (4)

In a region where NaCl is present, the rate of glass etching reaction by HF (Reaction Formula (5) below) is lower than that in a region where NaCl is not present. That is, the rate of glass etching reaction by HF varies from place to place on the surface of the glass ribbon 10. Since the glass ribbon 10 is at a high temperature, the rate of formation of NaCl crystals and the rate of etching reaction are high. Therefore, random irregularities with large height differences ranging from about 0.1 to 3 µm can be formed in the surface of the glass ribbon 10.

SiO₂ (glass) + 4HF → SiF₄ + 2H₂O (5)

Furthermore, the difference in the rate of glass etching reaction by HF may occur for another reason: When NaCl crystals are formed by the reaction shown in Reaction Formula (4), the number of Si-O-Si bonds increases locally in the glass and thus the etching reaction by HF is suppressed in places. As a result, the rate of glass etching reaction by HF varies from place to place on the surface of the glass ribbon 10. Probably, this mechanism is also the reason why random irregularities with large height differences ranging from about 0.1 to 3 µm are formed in the surface of the glass ribbon 10.

In addition, the mixed gas is in various forms, such as in the form of proton (H⁺), water (H₂O), and oxonium ion (H₃O⁺), in the region near the surface of the glass ribbon 10. The mixed gas in various forms enters the glass, and then, for example, the water having entered the glass exits from the glass by dehydration condensation, or silanol groups formed by dealcalization reaction undergo dehydration condensation in the annealing process as shown in Formula (6). For these reasons, in some cases, fine projections are further formed on the surface having the above-mentioned irregularities. These fine projections have a height of about 0.02 to 0.5 pm, for example.

≡Si-OH + HO-Si≡ ↔ H₂O + ≡Si-O-Si≡ (6)

The mixed gas does not contain water, or even if it contains water, the amount of water is as small as less than 5 in terms of the molar ratio of water to the acid *A* (molar concentration of water / molar concentration of acid *A*)*.* When the amount of water contained in the mixed gas is too large, irregularities that allow effective scattering of visible light cannot be obtained. It is desirable that the molar ratio of water to the acid *A* in the mixed gas be less than 3.

The time of contact between the mixed gas and the glass ribbon 10 is not particularly limited, and it is preferably 3 to 20 seconds, for example. When the time of contact is less than 3 seconds, desired irregularities cannot be formed in some cases. With the use of the mixed gas used in the production method of the present embodiment, the time of contact of about 20 seconds is long enough to form desired irregularities because the glass material coming into contact with the mixed gas has a high temperature. In the case where the mixed gas is brought into contact with the surface of the glass material at least two separate times, the time of contact can be, for example 3 to 20 seconds, in total.

In the system shown in FIG. 1, the step (II) of cooling the glass material is carried out in the annealing furnace 13. The cooling method is not particularly limited, and the cooling method performed in any known glass sheet production method can be used.

As the glass material, any known glass material can be used as long as it has a glass composition that can be used in the float process. For example, common soda-lime glass, aluminosilicate glass, or the like can be used, and its composition is not particularly limited as long as it contains sodium as a component. For example, common clear glass or low iron glass can be used. The thickness of the sheet-shaped glass material formed in the step (I) is not particularly limited because it is determined as appropriate depending on the thickness of a glass sheet to be produced. The thickness of the finally obtained glass sheet is not particularly limited, and can be 0.3 to 25 mm, for example.

According to the production method of the present embodiment, it is possible to produce a glass sheet having light scattering properties (having a haze ratio of at least 5%) only by performing a very simple operation of bringing a specific mixed gas into contact with the surface of a sheet-shaped glass material. In addition, it is also possible to perform the production method of the present embodiment using a production line for the float process, which is a continuous glass sheet production process. Thus, according to the production method of the present invention, it is possible to provide a glass sheet having light scattering properties in a more simple way than in conventional methods, without a significant decrease in production efficiency but with a minimal increase in production cost.

A glass sheet produced by the method of the present invention is described.

The glass sheet produced by the method of the present invention (hereafter referred as "the glass sheet of the present disclosure")is a plate-like glass sheet, at least one surface of which has irregularities. When a projection reference level representing a reference height for projections of the irregularities in the thickness direction of the glass sheet and a depression reference level representing a reference depth for depressions of the irregularities in the thickness direction of the glass sheet are determined for the surface having the irregularities, these irregularities satisfy the following conditions:
(1) in a cross section along the thickness direction of the glass sheet, the frequency with which the projections extend beyond the projection reference level is 0.1 to 10 times per micrometer (µm); and
(2) the distance between the projection reference level and the depression reference level is in a range of 0.1 to 3 µm.

First, the projection reference level and the depression reference level are described. When changes in porosity of the glass sheet are observed along the thickness direction from the surface (irregular surface) of the glass sheet, the projection reference level is an intermediate level between a level at which the porosity of the glass sheet first reaches 90% and a level at which the porosity stops decreasing and begins to increase. When changes in porosity of the glass sheet are observed along the thickness direction from the surface (irregular surface) of the glass sheet, the depression reference level is a deeper level at which the porosity is 10%. As used herein, the "level at which the porosity stops decreasing and begins to increase" means the "level at which the porosity is observed to stop decreasing and begin to increase", that is, the "porosity trough between its decrease and the subsequent increase". The "level at which the porosity stops decreasing and begins to increase" can be identified using a bearing curve described later. When the number of pixels is too large, the resulting bearing curve fluctuates minutely, and points at which the porosity seems to stop decreasing and begin to increase are observed within a very limited range. As used herein, however, the "level at which the porosity stops decreasing and begins to increase" does not mean the level at which the porosity stops decreasing and begins to increase within such a very limited range, but means the "level at which the porosity stops decreasing and begins to increase" determined by the profile of the bearing curve of the entire region having a porosity ranging from 0 to 100%. It is desirable to obtain a smooth bearing curve so as to identify the "level at which the porosity stops decreasing and begins to increase" from that curve. In order to obtain such a smooth bearing curve, the number of pixels is desirably 100 to 200 pixels per nanometer (nm).

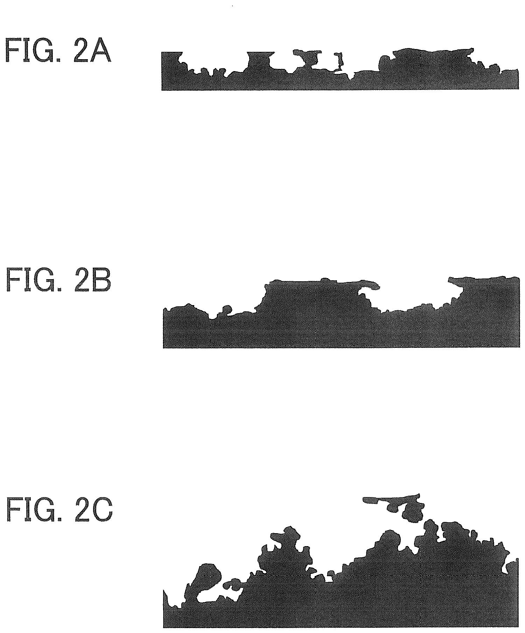

Here, how to determine the porosity is described. First, a projection image of the cross section taken along the thickness direction of a glass sheet is prepared. The projection image is a binarized image of the cross-sectional view taken along the thickness direction of the glass sheet. This binarized image can be obtained by scanning a SEM photograph of the cross section taken along the thickness direction of the glass sheet and then subjecting the data obtained by the scanning to binarization. FIGs. 2A to 2C are each an image obtained by binarizing the cross section taken along the thickness direction of a portion of each of glass sheets of Examples described later including its irregular surface. In each of FIGs. 2A to 2C, the upper surface is the irregular surface, and the vertical direction is the thickness direction of the glass sheet. This binarized image shows an image obtained as a result of binarization to represent a region where glass is present in black and a region where glass is not present, that is, a void region in white.

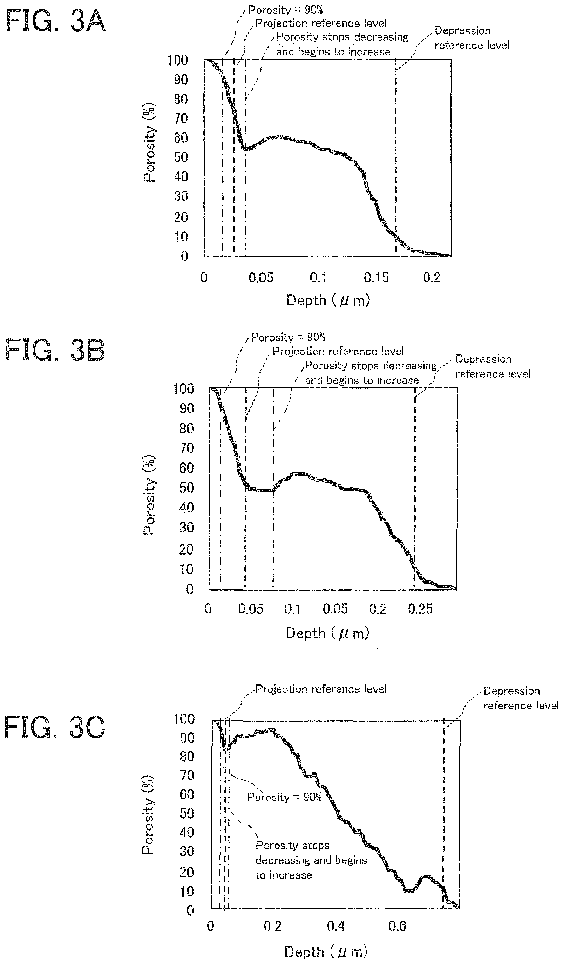

FIGs. 3A to 3C are so-called bearing curves, which are obtained by calculations based on the results shown in FIGs. 2A to 2C, respectively. A bearing curve is a curve defined by JIS B 0601. In FIGs. 3A to 3C, the horizontal axis represents the distance (depth) in the thickness direction of a glass sheet from the outermost surface (maximum projection) of the glass sheet, while the vertical axis represents the porosities at different levels in the thickness direction. The porosities at different levels in the thickness direction mean the proportions of voids at different levels in the thickness direction in a cross section of the glass sheet taken along the thickness direction. Specifically, the porosities can be calculated by counting the number of white pixels, i.e., pixels representing voids, in the binarized image data.

One of the reference levels used to determine the projection reference level is a level at which the porosity of the glass sheet first reaches 90% when changes in porosity of the glass sheet are observed along the thickness direction from the surface of the glass sheet. That is, among the levels at which the porosity is 90%, the level closest to the surface is used as a reference level. The reason why the highest level of projections (maximum projection) in the thickness direction of the glass sheet is not used as a reference level is as follows: For example, when a remarkably high projection is present in the surface of a glass sheet but it has no effect on the haze ratio of the glass sheet, if the projection reference level is determined using this projection as a reference level, the actual irregularities cannot be represented accurately. On the other hands, such a projection having no effect on the haze ratio of the glass sheet can be regarded as a noise in the surface irregularities of the glass sheet associated with the haze ratio of the glass sheet. The effect of this noise on the porosity is 10% at most. For these reasons, the level at which the porosity of the glass sheet reaches 90% when changes in porosity of the glass sheet are observed along the thickness direction from the surface of the glass sheet is used as one of the reference levels.

The reason why the level at which the porosity stops decreasing and begins to increase is used as another reference level is also described. The irregular surface of the glass sheet includes a depression like a deep hollow inside the glass sheet (i.e., a depression having an inner wall with a larger diameter at a deeper level from the surface). Therefore, it can be determined that the level at which the porosity stops decreasing and begins to increase is not a level in a projection but a level in a depression.

Therefore, in the present disclosure, the intermediate level between a level at which the porosity first reaches 90% and a level at which the porosity stops decreasing and begins to increase is defined as a projection reference level and used as a reference for determining the height difference of the irregularities.

The reason why the deepest level of a void in the thickness direction of the glass sheet is not used as a depression reference level is the same as the reason why the level at which the porosity is 90% is used as one of the reference levels for determining the projection reference level. That is, the purpose is to exclude the depressions regarded as noises in the irregularities.

In a cross section along the thickness direction of the glass sheet of the present disclosure, a frequency with which the projections extend beyond the projection reference level is 0.1 to 10 times per micrometer (µm). Thereby, a high haze glass sheet is obtained. If the frequency with which the projections extend beyond the projection reference level is higher than this range, the pitch of the irregularities is smaller than the wavelength of incident light, scattering of shorter wavelength light is dominant, and thus the haze probably does not increase. More specifically, since the pitch of the irregularities of the glass sheet of the present disclosure becomes smaller than the wavelength of light to be scattered in the present disclosure, scattering of light having shorter wavelengths than the wavelength of the light to be scattered in the present disclosure increases while scattering of light having longer wavelengths including the light to be scattered in the present disclosure decreases, and thus the haze probably does not increase. On the other hand, even a glass sheet with the frequency being lower than the above range may have a high haze in some cases. However, it is not practical to obtain such a glass sheet because it is considered difficult to produce a glass sheet having all the features of the present disclosure except the frequency lower than the above range. Here, the frequency with which the projections extend beyond the projection reference level is measured as the number of projections whose top levels exceed the projection reference level, and thus a frequency of 1 is equivalent to one projection extending beyond the projection reference level.

Furthermore, in the glass sheet of the present disclosure, the distance between the projection reference level and the depression reference level is in a range of 0.1 to 3 µm. This size of the irregularities is approximate to the wavelength of visible light. Therefore, the glass sheet of the present disclosure can have light scattering properties (a haze ratio of at least 5%). A glass sheet in which the distance between the projection reference level and the depression reference level is in a range of 0.1 to 0.3 µm is preferred because such a glass sheet can have better light scattering properties.

It is preferable that fine projections having a height of 0.02 to 0.5 µm be randomly distributed in a region of the surface of the glass sheet between the projection reference level and the depression reference level. The glass sheet further having such fine projections formed in its surface can exhibit better visible light scattering properties.

The irregularities need form a repeating pattern of projections and depressions but neighboring projection and depression need not form a continuous profile.

Since the glass sheet of the present disclosure can have a high haze ratio as described above, it can suitably be used, for example, as a glass sheet for use in greenhouses (a glass sheet for greenhouses).

The glass sheet having such a high haze ratio can be used as an anti-glare glass or a privacy protecting glass, and further can be suitably used as a glass for organic EL devices (OLEDs). Since the glass sheet has characteristic surface irregularities, it has not only low-friction properties but also the effect of fingerprint resistance. The glass sheet of the present disclosure can also be subjected to strengthening processes such as chemical strengthening and air cooling strengthening.

The glass sheet of the present disclosure can be produced by appropriately adjusting the concentrations of the acid *A* and the acid *B* and the concentration of water in the mixed gas and further appropriately adjusting the temperature of the glass material in contact with the mixed gas in the glass sheet production method of the first disclosure.

For example, common soda-lime glass can be used for the glass sheet. The composition of the glass is not particularly limited, although it desirably contains sodium as a component. For example, common clear glass or low iron glass can be used. The thickness of the glass sheet is not particularly limited, and can be, for example, 0.3 to 25 mm.

### EXAMPLES

Hereinafter, the present invention will be described in more detail using examples. However, the present invention is not limited to the examples given below, and other examples are possible as long as they do not depart from the gist of the present invention. The properties of each glass sheet were evaluated in the following manner.

### [Haze ratio]

"Haze-Guard Plus" manufactured by BYK Gardner and Illuminant C were used to measure the haze ratio of each glass sheet.

### [Binarization of SEM observation result]

A SEM photograph of a cross section taken along the thickness direction of each glass sheet was scanned by a scanner, and the data obtained by the scanning was subjected to binarization. Photoshop (CS6) manufactured by Adobe Systems Incorporated was used as the scanner. The data was binarized so that a region where glass is present was represented in black and a region where glass was not present, that is, a void region was represented in white.

### [Determination of projection reference level and depression reference level]

First, the porosities at different levels in the thickness direction were determined with respect to the distance (depth) from the surface (irregular surface) of the glass sheet in the thickness direction of the glass sheet. The porosities at different levels in the thickness direction mean the proportions of voids at different levels in the thickness direction in a cross section of the glass sheet taken along the thickness direction. Specifically, the porosities were calculated by counting the number of white pixels, i.e., pixels representing voids, in the binarized image data. When changes in porosity of the glass sheet were observed along the thickness direction from the surface (irregular surface) of the glass sheet, the projection reference level was determined as an intermediate level between a level at which the porosity of the glass sheet first reached 90% and a level at which the porosity stopped decreasing and began to increase. When changes in porosity of the glass sheet were observed along the thickness direction from the surface (irregular surface) of the glass sheet, the depression reference level was determined as a deeper level at which the porosity was 10%.

### [Frequency with which projections extend beyond projection reference level]

The frequency with which the projections extended beyond the projection reference level was determined by visually counting the number of extending projections in the above-mentioned binarized image. Specific description is given below. First, the number of points of intersection of the projection reference level and the boundary lines between the black region and the white region per micrometer (µm) of the image was counted. Next, the value of x calculated from the equation: x = (n+1)/2, where n is the number of the points of intersection thus counted, was determined as the frequency with which the projections extended beyond the projection reference level.

### (Examples 1 to 3)

Soda-lime glass sheets were produced by a float process. For the production of the glass sheets, a system having the same configuration as the system shown in FIG. 1 was used. First, a glass material (having a glass transition temperature of 558°C) was prepared so as to have the following main composition of glass: 70.8 wt% of SiO₂, 1.0 wt% of Al₂O₃, 5.9 wt% of MgO, 8.5 wt% of CaO, and 13.2 wt% of Na₂O. The glass material was melted, the glass material melted was formed into a glass ribbon on molten tin in a float bath, and a mixed gas was supplied at a flow rate of 20 L/min onto the surface of the glass ribbon using a spray gun. The mixed gas was composed of HF, HCl, and H₂O, and N₂ for adjusting the flow rate. In the mixed gas, the HF concentration was 4 mol%, the HCl concentration was 1 mol%, and the H₂O concentration was 3.6 mol%. The remaining part of the mixed gas was N₂. The temperature of the glass ribbon in contact with the mixed gas was 660°C. The time of contact between the mixed gas and the glass ribbon was 3 seconds in Example 1, 6 seconds in Example 2, and 12 seconds in Example 3. Then, the annealing step was performed to obtain a glass sheet.

For the glass sheets thus obtained in Examples 1 to 3, the haze ratios were measured. Table 1 shows the measurement results.

Furthermore, the cross sections of the glass sheets were subjected to SEM observation, and the obtained SEM photographs were subjected to binarization. FIGs. 2A to 2C are respectively binarized images of the cross sections taken along the thickness direction of the glass sheets of Examples 1 to 3. FIG. 3A shows the porosity of the surface of the glass sheet of Example 1 calculated using the data of FIG. 2A. FIG. 3B shows the porosity of the surface of the glass sheet of Example 2 calculated using the data of FIG. 2B. FIG. 3C shows the porosity of the surface of the glass sheet of Example 3 calculated using the data of FIG. 2C. The projection reference levels and the depression reference levels of the glass sheets of Examples 1 to 3 were determined using FIGs. 3A to 3C to obtain the distances between the projection reference levels and the depression reference levels. Table 1 shows the results.

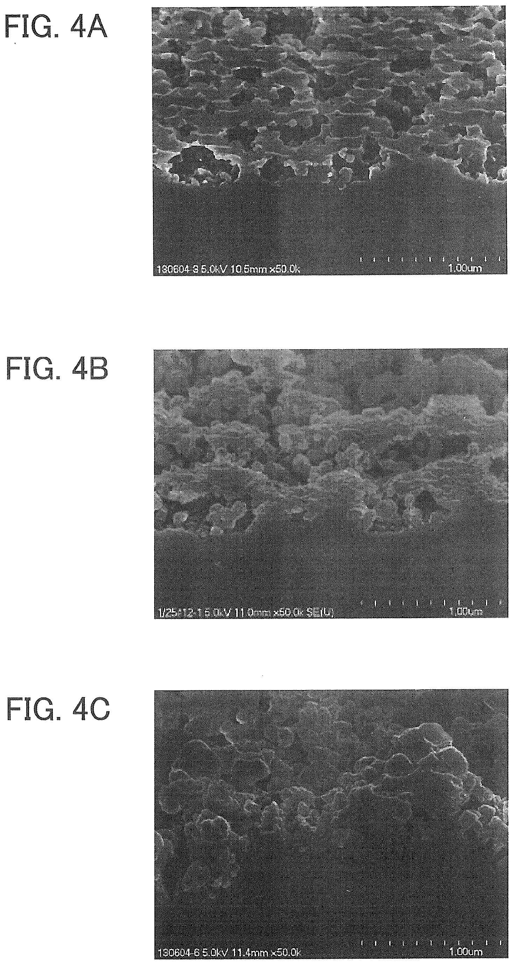

For the glass sheets of Examples 1 to 3, SEM photographs thereof taken from obliquely above (i.e., SEM photographs including the irregular surfaces and cross sections of the glass sheets) were also taken. FIGs. 4A to 4C are respectively SEM photographs of the glass sheets of Examples 1 to 3, taken from obliquely above. As seen from these SEM photographs and the binarized images of the cross sections in FIGs. 2A to 2C, fine projections (projections having a height of 0.02 to 0.5 µm) were randomly distributed in a region of the surface of each glass sheet between the projection reference level and the depression reference level.

**Table 1**

| | | Ex. 1 | Ex. 2 | Ex. 3 |
|---|---|---|---|---|
| Frequency with which projections extend beyond projection reference level (times/µm) | | 2.0 | 1.6 | 0.8 |
| Distance between projection reference level and depression reference level (µm) | | 0.143 | 0.203 | 0.703 |
| Height of fine projections (µm) | | 0.03 to 0.1 | 0.02 to 0.2 | 0.05 to 0.5 |
| Haze ratio (%) | | 7 | 17 | 38 |
| Production conditions | HCl concentration in mixed gas (mol%) | 1 | 1 | 1 |
| | HF concentration in mixed gas (mol%) | 4 | 4 | 4 |
| | H₂O concentration in mixed gas (mol%) | 3.6 | 3.6 | 3.6 |
| | Temperature of glass ribbon in contact with mixed gas (°C) | 660 | 660 | 660 |
| | Time of contact between mixed gas and glass ribbon (seconds) | 3 | 6 | 12 |
| | Glass material | Soda-lime glass | Soda-lime glass | Soda-lime glass |

As shown in Table 1, glass sheets having the characteristic surface morphology defined for the glass sheet produced by the method of the present invention and having light scattering properties with a haze ratio of more than 5% could be produced in a simple way, i.e., by bringing a mixed gas containing HCl and HF and having a molar ratio of water to HF of less than 5 into contact with the surface of a glass ribbon.

### (Examples 4 to 15 and Comparative Examples 1 to 8)

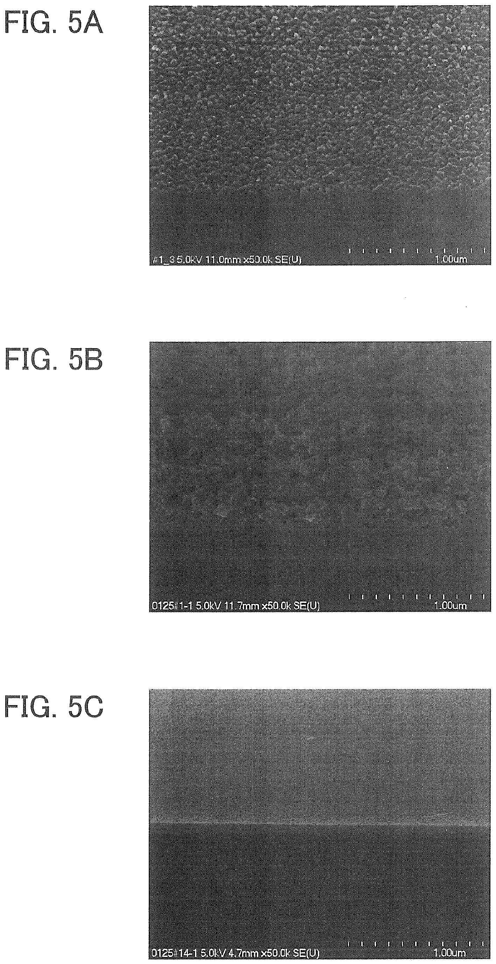

Glass sheets of Examples 4 to 15 and Comparative Examples 1 to 8 were obtained in the same manner as in Examples 1 to 3, except that they were produced under different production conditions as shown in Table 2. The haze ratios of the resulting glass sheets were measured. Table 2 shows the results. Table 2 also shows the production conditions and measurement results of the haze ratios in Examples 1 to 3. For the glass sheets of Comparative Examples 2, 3, and 6, SEM photographs thereof as seen from obliquely above (i.e., SEM photographs including the surfaces of the glass sheets sprayed with a mixed gas and the cross sections thereof) were also taken. FIGs. 5A to 5C are respectively SEM photographs of the glass sheets of Comparative Examples 2, 3, and 6, taken from obliquely above.

### (Example 16 and Comparative Examples 9 and 10)

Glass sheets of Example 16 and Comparative Examples 9 and 10 were obtained in the same manner as in Examples 1 to 3, except that trifluoroacetic acid (TFA) was used as the fluorine element-containing acid A in the mixed gas and that they were produced under different production conditions as shown in Table 3. The haze ratios of the resulting glass sheets were measured. Table 3 shows the results.

**Table 2**

| | HCl concentration in mixed gas (mol%) | HF concentration in mixed gas (mol%) | H₂O concentration in mixed gas (mol%) | Temperature of glass ribbon in contact with mixed gas (°C) | Time of contact between mixed gas and glass ribbon (seconds) | Haze ratio (%) |
|---|---|---|---|---|---|---|
| Ex. 1 | 1 | 4 | 3.6 | 660 | 3 | 7 |
| Ex. 2 | 1 | 4 | 3.6 | 660 | 6 | 17 |
| Ex. 3 | 1 | 4 | 3.6 | 660 | 12 | 38 |
| Ex. 4 | 1 | 5 | 4.5 | 660 | 6 | 8 |
| Ex. 5 | 2.5 | 4 | 3.6 | 660 | 6 | 16 |
| Ex. 6 | 4 | 4 | 3.6 | 660 | 6 | 13 |
| Ex. 7 | 1 | 3 | 2.7 | 660 | 6 | 7 |
| Ex. 8 | 1 | 4 | 3.6 | 660 | 9 | 6 |
| Ex. 9 | 1 | 4 | 3.6 | 660 | 20 | 28 |
| Ex. 10 | 1 | 4 | 3.6 | 630 | 6 | 11 |
| Ex. 11 | 1 | 3 | 2.7 | 600 | 12 | 12 |
| Ex. 12 | 1 | 4 | 2.7 | 600 | 12 | 6 |
| Ex. 13 | 1 | 4 | 5.2 | 660 | 6 | 14 |
| Ex. 14 | 1 | 4 | 6.7 | 660 | 6 | 8 |
| Ex. 15 | 1 | 4 | 9.9 | 660 | 6 | 6 |
| Com. Ex. 1 | 0 | 3.3 | 0 | 700 | 6.6 | 0.1 |
| Com. Ex. 2 | 0 | 19 | 0 | 680 | 2.2 | 0.2 |
| Com. Ex. 3 | 0 | 4 | 3.6 | 660 | 6 | 0.4 |
| Com. Ex. 4 | 0 | 4 | 3.6 | 600 | 6 | 0.2 |
| Com. Ex. 5 | 0 | 4 | 3.6 | 600 | 9 | 0.6 |
| Com. Ex. 6 | 4 | 0 | 0 | 660 | 6 | 0.2 |
| Com. Ex. 7 | 4 | 0 | 60 | 660 | 3 | 0.1 |
| Com. Ex. 8 | 4 | 4 | 60 | 660 | 6 | 0.0 |

The glass sheets of Examples 1 to 15 produced by the production method of the present invention had light scattering properties with haze ratios of at least 5%. In contrast, the glass sheets of Comparative Examples 1 to 8 produced using a mixed gas containing no HCl, a mixed gas containing no HF, or a mixed gas containing a high proportion of H₂O had haze ratios of less than 1% and thus did not have light scattering properties. It was confirmed that the glass sheets of Comparative Examples 2 and 3 shown in FIGs. 5A and 5B had irregularities in the surfaces but their surface morphologies were distinctly different from those of the glass sheets of Examples 1 to 3 shown in FIG. 4A to 4C. The glass sheet of Comparative Example 6 shown in FIG. 5C had no irregularities in the surface. As seen from the SEM photograph, the glass sheet of Comparative Example 2 (FIG. 5A) had irregularities having a size of about 0.1 µm, which revealed that the distance between the projection reference level and the depression reference level was less than 0.1 µm.

**Table 3**

| | HCl concentration in mixed gas (mol%) | TFA concentration in mixed gas (mol%) | H₂O concentration in mixed gas (mol%) | Temperature of glass ribbon in contact with mixed gas (°C) | Time of contact between mixed gas and glass ribbon (seconds) | Haze ratio (%) |
|---|---|---|---|---|---|---|
| Ex. 16 | 4 | 4 | 0 | 630 | 6 | 8.3 |
| Com. Ex. 9 | 0 | 4 | 0 | 630 | 6 | 0.1 |
| Com. Ex. 10 | 4 | 3 | 40 | 630 | 6 | 0.1 |

The glass sheet of Example 16 produced by the production method of the present invention had light scattering properties with a haze ratio of at least 5%. In contrast, the glass sheet of Comparative Example 9 obtained using a mixed gas containing no HCl or the glass sheet of Comparative Example 10 obtained using a mixed gas containing a high proportion of H₂O had a haze ratio of less than 1% and thus did not have light scattering properties.

### INDUSTRIAL APPLICABILITY

The glass sheet obtained by the present invention has light scattering properties. Therefore, the glass sheet produced by the method of the present invention can be used for various applications, such as front glass panels of solar cells, glass substrates for displays, glass substrates for organic EL devices, and glass sheets for windows of buildings or moving vehicles and for partitions, which require not only light scattering properties but also low-friction properties and fingerprint resistance.

## Claims

1. A method for producing a glass sheet, comprising the steps of:
(I) bringing a mixed gas into contact with at least one surface of a sheet-shaped glass material so as to change a surface morphology of the glass material to an extent that light scattering properties of the glass material are changed, the mixed gas containing a fluorine element (F)-containing acid *A* and a chlorine element (Cl)-containing acid *B* and having a molar ratio of water to the acid *A* (molar concentration of water / molar concentration of acid *A*) of less than 5, the glass material containing at least sodium as a component and having a temperature in a range from its glass transition temperature to a temperature 300°C higher than the glass transition temperature; and
(II) cooling the sheet-shaped glass material obtained in the step (I) so as to obtain a glass sheet
wherein in the mixed gas, the acid *A* is hydrogen fluoride (HF) and the concentration of HF in the mixed gas is 1 to 10 mol%, and
wherein in the mixed gas, the acid *B* is hydrogen chloride (HCl) and the concentration of HCl contained in the mixed gas is 0.1 to 10 mol%.

2. The method for producing a glass sheet according to claim 1, wherein the step (I) comprises:
forming a molten glass material into a sheet on a molten metal; and
bringing the mixed gas into contact with a surface of the sheet-shaped glass material floating on the molten metal and having a temperature in a range from its glass transition temperature to a temperature 300°C higher than the glass transition temperature, so as to change a surface morphology of the glass material to an extent that light scattering properties of the glass material are changed.

3. The method for producing a glass sheet according to claim 1, wherein in the step (I), the mixed gas is brought into contact with the surface of the glass material at least two separate times.

## Patentansprüche

1. Verfahren zur Herstellung einer Glasscheibe, umfassend die Schritte des:
(I) Inkontaktbringens eines Gasgemisches mit wenigstens einer Oberfläche eines scheibenförmigen Glasmaterials, um eine Oberflächenmorphologie des Glasmaterials dergestalt zu ändern, dass Lichtstreuungseigenschaften des Glasmaterials geändert werden, wobei das Gasgemisch eine ein Fluorelement (F) enthaltende Säure *A* und eine ein Chlorelement (C) enthaltende Säure *B* enthält und ein Molverhältnis von Wasser zu der Säure *A* (molare Konzentration von Wasser / molare Konzentration der Säure *A*) von weniger als 5 aufweist, wobei das Glasmaterial wenigstens Natrium als Bestandteil enthält und eine Temperatur in einem Bereich von seiner Glasübergangstemperatur bis zu einer Temperatur, die 300°C höher ist als die Glasübergangstemperatur, aufweist, und
(II) Abkühlens des in Schritt (I) erhaltenen scheibenförmigen Glasmaterials, um eine Glasscheibe zu erhalten,
wobei in dem Gasgemisch die Säure *A* Fluorwasserstoff (HF) ist und die Konzentration von HF in dem Gasgemisch 1 bis 10 Mol% beträgt, und
wobei in dem Gasgemisch die Säure *B* Chlorwasserstoff (HCl) ist und die Konzentration des in dem Gasgemisch enthaltenen HCl 0,1 bis 10 Mol% beträgt.

2. Verfahren zur Herstellung einer Glasscheibe nach Anspruch 1, wobei Schritt (I) umfasst:
Formen eines geschmolzenen Glasmaterials zu einer Scheibe auf einem geschmolzenen Metall und
Inkontaktbringen des Gasgemisches mit einer Oberfläche des scheibenförmigen Glasmaterials, das auf dem geschmolzenen Metall schwimmt und eine Temperatur in einem Bereich von seiner Glasübergangstemperatur bis zu einer Temperatur, die 300°C höher ist als die Glasübergangstemperatur, aufweist, um eine Oberflächenmorphologie des Glasmaterials dergestalt zu ändern, dass Lichtstreuungseigenschaften des Glasmaterials geändert werden.

3. Verfahren zur Herstellung einer Glasscheibe nach Anspruch 1, wobei in Schritt (I) das Gasgemisch zu wenigstens zwei unterschiedlichen Zeitpunkten mit der Oberfläche des Glasmaterials in Kontakt gebracht wird.

## Revendications

1. Procédé de production d'une feuille de verre, comprenant les étapes de :
(I) mise en contact d'un gaz mixte avec au moins une surface d'un matériau de verre en forme de feuille afin de modifier une morphologie de surface du matériau de verre dans une mesure telle que les propriétés de dispersion de lumière du matériau de verre sont modifiées, le gaz mixte contenant un acide *A* contenant un élément de fluor (F) et un acide *B* contenant un élément de chlore (Cl) et présentant un rapport molaire d'eau à l'acide *A* (concentration molaire d'eau/ concentration molaire d'acide *A*) inférieur à 5, le matériau de verre contenant au moins du sodium comme un constituant et présentant une température dans un intervalle de sa température de transition vitreuse jusqu'à une température 300°C plus élevée que la température de transition vitreuse ; et
(II) refroidissement du matériau de verre en forme de feuille obtenu dans l'étape (I) afin d'obtenir une feuille de verre
dans lequel dans le gaz mixte, l'acide *A* est le fluorure d'hydrogène (HF) et la concentration en HF dans le gaz mixte est de 1 à 10 % en mole, et
dans lequel dans le gaz mixte, l'acide *B* est le chlorure d'hydrogène (HCl) et la concentration en HCl contenu dans le gaz mixte est de 0,1 à 10 % en mole.

2. Procédé de production d'une feuille de verre selon la revendication 1, dans lequel l'étape (I) comprend :
le façonnage d'un matériau de verre fondu en une feuille sur un métal fondu ; et
la mise en contact du gaz mixte avec une surface du matériau de verre en forme de feuille flottant sur le métal fondu et présentant une température dans un intervalle de sa température de transition vitreuse jusqu'à une température 300°C supérieure à la température de transition vitreuse, afin de modifier une morphologie de surface du matériau de verre dans une mesure telle que les propriétés de dispersion de lumière du matériau de verre sont modifiées.

3. Procédé de production d'une feuille de verre selon la revendication 1, dans lequel dans l'étape (I), le gaz mixte est mis en contact avec la surface du matériau de verre à au moins deux moments différents.
